# FASCICULE DE BREVET EUROPEEN

(11) **EP 2 707 259 B1**
(45) Date de publication et mention de la délivrance du brevet: **07.06.2017**
(21) Numéro de dépôt: 12722460.8
(22) Date de dépôt: 24.04.2012
(51) Int. Cl.: B60S 1/52, B60S 1/38

(54) **BALAI D'ESSUIE-GLACE A DISPOSITIF DE PROJECTION DE LIQUIDE SUR LA LEVRE DE LA RACLETTE**
SCHEIBENWISCHERBLATT MIT EINER VORRICHTUNG ZUM VERSPRÜHEN VON FLÜSSIGKEITS AUF DEN RAND DES SCHABERS
WINDSHIELD WIPER BLADE INCLUDING A DEVICE FOR SPRAYING LIQUID ONTO THE LIP OF THE SCRAPER

(30) Priorité: 09.05.2011 FR 1153964
(43) Date de publication de la demande: 19.03.2014
(73) Titulaire: Peugeot Citroën Automobiles SA, 78140 Vélizy Villacoublay (FR)
(72) Inventeur: BOUGUERRA, Akim Driss, F-69100 Villeurbanne (FR); JEUFFE, Gerard, F-78580 Bazemont (FR); LEBLANC, Nicolas, F-26300 Besayes (FR); MEYER, Geoffroy, F-26300 Bourg de Peage (FR); MILOHANIC, Daniel, F-91300 Massy (FR)
(74) Mandataire: Jeannin, Laurent Jean-Pierre
(86) Numéro de dépôt international: PCT/FR2012/050892
(87) Numéro de publication internationale: WO 2012/153028

(56) Documents cités:
- EP-A1- 0 860 336
- FR-A1- 2 329 481
- FR-A1- 2 648 771
- FR-A1- 2 916 716
- FR-A1- 2 920 729
- FR-A1- 2 933 933
- US-A- 5 539 951

## Description

L'invention concerne le domaine des balais d'essuie-glace à dispositif de projection de liquide sur la raclette. Le balai d'essuie-glace est destiné à un véhicule, de préférence à un véhicule terrestre de type voiture, camion ou bus.

Selon un premier art antérieur décrit dans la demande de brevet anglaise GB 410259 publiée en 1934, il est connu un balai d'essuie-glace dont le dispositif de projection de liquide projette le liquide de lavage directement sur la lèvre de la raclette plutôt que classiquement sur le pare-brise du véhicule en avant de la raclette.

Selon un deuxième art antérieur décrit dans la demande de brevet française FR 2933933 publiée en 2010, il est connu un balai d'essuie-glace dont le dispositif de projection de liquide projette le liquide de lavage directement sur la lèvre de la raclette plutôt que classiquement sur le pare-brise du véhicule en avant de la raclette.

Dans le premier art antérieur, tout comme dans le deuxième art antérieur, le dispositif de projection de liquide projette un large jet conique de liquide simultanément sur une partie notable de la lèvre de la raclette, encore appelé également spray. Il en résulte une quantité importante de liquide de lavage consommée par le dispositif de projection de liquide de lavage. Par ailleurs, cette projection de liquide de lavage simultanément sur une vaste surface de la lèvre de la raclette ne permet pas de canaliser la projection de liquide laquelle en se répandant largement, notamment en ricochant sur la surface de la lèvre de la raclette, provoque des coulures sur le pare-brise qui gênent la visibilité notamment du conducteur du véhicule.

Dans un premier temps, l'invention s'attache à diminuer la consommation de liquide de lavage ainsi que les coulures sur le pare-brise du véhicule. Pour cela, l'invention propose un gicleur structuré et orienté de manière à projeter, au niveau d'une extrémité de la raclette, un jet de liquide qui s'écoule ensuite le long de la lèvre de la raclette. Le jet de liquide touche la surface de la lèvre de la raclette en un endroit limité et proche de l'extrémité de manière suffisamment tangente pour pouvoir ensuite s'écouler le long de la lèvre de la raclette, sur la majeure partie de la lèvre de la raclette, de manière surtout laminaire.

Le balai d'essuie-glace de véhicule, comporte une raclette souple de forme allongée, et un dispositif de projection de liquide sur la lèvre d'essuyage de la raclette. Le dispositif de projection de liquide comprend un gicleur structuré et orienté de manière à projeter, au niveau d'une extrémité de la raclette, un jet de liquide qui s'écoule ensuite le long de la lèvre de la raclette. Préférentiellement, le jet de liquide est projeté uniquement dans le premier dixième de la longueur de la lèvre d'essuyage de la raclette à partir d'une extrémité de la raclette, voir même avantageusement dans le premier vingtième de la longueur de la lèvre de la raclette à partir d'une extrémité de la raclette. Le jet de liquide est projeté au niveau d'un point d'impact ou au niveau d'zone d'impact de taille réduite sur la lèvre de la raclette, selon une puissance et une direction d'impact lui permettant ensuite de s'écouler le long de la lèvre de la raclette, sur toute la lèvre de la raclette ou au moins sur la majeure partie de la lèvre de la raclette.

Préférentiellement, le dispositif de projection de liquide projette le jet de liquide de lavage sur la lèvre de la raclette, lorsque le balai d'essuie-glace est dans sa position de repos, c'est-à-dire à l'arrêt, avant le retournement de la lèvre de la raclette. La position de repos est généralement située en bas de pare-brise pour une voiture.

Le jet de liquide est projeté et s'écoule ensuite le long de la majeure partie de la lèvre de la raclette, avantageusement pendant cette période de repos, lorsque le balai d'essuie-glace est à l'arrêt avant de se retourner et de se déplacer à nouveau sur son aire d'essuyage pour essuyer la surface vitrée. Le retournement de la lèvre de la raclette, avant sa remontée sur la surface vitrée, permet de plaquer le liquide de lavage qui s'est écoulé le long de la majeure partie de la lèvre, entre la lèvre et la surface vitrée. Si le liquide de lavage ne s'est pas écoulé sur toute la longueur de la lèvre de la raclette, lors de la remontée de la raclette, la force centrifuge assurera la répartition du liquide jusqu'à l'extrémité de la raclette opposée à celle qui porte le gicleur.

Dans cette position de repos, la lèvre souple de la raclette souple étant en appui sur la surface vitrée, cette lèvre souple forme une concavité sur toute sa longueur, concavité dans laquelle le jet de liquide projeté peut ensuite s'écouler plus facilement et plus loin tout en conservant un écoulement essentiellement laminaire.

Dans un deuxième temps, l'invention ambitionne d'une part d'abord de faciliter la fabrication, en particulier par moulage, du capuchon recouvrant l'extrémité de la raclette et d'autre part éventuellement de permettre différentes orientations de gicleur lors de sa mise en place sur une même structure de capuchon pour s'adapter à différentes longueurs de raclette selon les différents balais d'essuie-glace considérés.

L'invention s'attache également à respecter des caractéristiques de forme et d'orientation de jet de liquide bien adaptées pour un écoulement, essentiellement laminaire, peu ou pas perturbé, de ce jet de liquide le long de la lèvre de la raclette, et d'obtenir pour cela des tolérances de dimensionnement faibles pour la canalisation du dispositif de projection de liquide. Pour réaliser un bon compromis entre toutes ces exigences, l'invention propose d'une part d'intégrer complètement une portion de la canalisation à la structure du capuchon en rendant cette portion de canalisation monobloc avec le capuchon, et d'autre part d'utiliser pour le gicleur une pièce rapportée qui sera donc raccordée à cette portion de canalisation, mais non pas intégrée à cette portion de canalisation. Lors du raccordement, la pièce rapportée que constitue le gicleur pourra bien sûr être fixé à la portion de canalisation laquelle est déjà monobloc avec le capuchon.

Selon l'invention, il est prévu un balai d'essuie-glace de véhicule, comportant une raclette souple de forme allongée, un capuchon recouvrant une extrémité de la raclette, un dispositif de projection de liquide sur la lèvre d'essuyage de la raclette, caractérisé en ce que ledit dispositif de projection de liquide comprend un gicleur structuré et orienté de manière à projeter, au niveau d'une extrémité de la raclette, un jet de liquide qui s'écoule ensuite le long de la lèvre de la raclette, une portion de canalisation monobloc avec ledit capuchon, dont une extrémité est raccordée au gicleur et dont une autre extrémité est destinée à être raccordée au tuyau d'alimentation en liquide. Le liquide de lavage passe successivement par le tuyau d'alimentation, la portion de canalisation, le gicleur, avant d'être projeté sur la lèvre de la raclette.

Le raccordement direct du gicleur sur une portion de canalisation complètement intégrée au capuchon, c'est-à-dire monobloc avec le capuchon, permet une tolérance dimensionnelle très précise tout en offrant une grande souplesse d'orientation de la direction de projection du jet de liquide, et ceci, en maintenant une relative simplicité au procédé de fabrication du capuchon, ce qui ne pourrait pas être le cas si le gicleur était par exemple moulé d'une seule pièce avec le capuchon. Le capuchon recouvre bien l'ensemble de l'extrémité de la raclette, sauf la lèvre, de manière à assurer un positionnement précis du capuchon et de la portion de canalisation monobloc avec le capuchon, par rapport à la raclette et donc par rapport à la lèvre intégrée à la raclette.

De préférence, le gicleur se termine par un tube de diamètre intérieur constant. Le tube est droit, c'est-à-dire rectiligne. Une éventuelle partie coudée du gicleur est donc distincte du tube qui en est la partie droite. Cette réalisation simple du gicleur garantit plus aisément les caractéristiques du jet de liquide de lavage projeté pour qu'il puisse s'écouler le long de la lèvre d'essuyage de la raclette de manière la plus laminaire possible.

Avantageusement, la longueur du tube vaut au moins six fois son diamètre intérieur, voire éventuellement au moins huit fois.

Ainsi, le jet de liquide projeté présente une section plus circulaire à plus grande distance du gicleur, ce qui permet un meilleur écoulement laminaire sans perturbation.

De préférence, le diamètre intérieur du tube est compris entre 0.3mm et 1.5mm. Avantageusement, le diamètre intérieur du tube est compris entre 0.3mm et 1mm, notamment pour les voitures. Le diamètre intérieur du tube vaut par exemple 0.7mm. L'encombrement du gicleur est par conséquent très faible, tout en offrant un jet de liquide suffisant pour s'écouler le long de la lèvre de la raclette à partir d'une extrémité de la raclette. Un matériau dur pour constituer le corps du tube est particulièrement intéressant, car à cette faible valeur de diamètre intérieur, la pression est très importante, et la paroi du tube devrait se déformer le moins possible, pour garantir les caractéristiques du jet de liquide projeté le mieux possible.

Avantageusement, ladite portion de canalisation est venue de matière avec le capuchon. Pour d'autres véhicules, comme pour les camions ou les bus, le diamètre intérieur du tube est préférentiellement compris entre 0.5mm et 1.5mm.

De préférence, la direction moyenne de ladite portion de canalisation fait, avec la direction moyenne de la raclette, un angle compris entre 30 degrés et 60 degrés. Avantageusement, la direction moyenne de ladite portion de canalisation fait, avec la direction moyenne de la raclette, un angle compris entre 40 degrés et 50 degrés. Ainsi, avec la présence d'un deuxième balai portant une deuxième raclette pour nettoyer une large surface vitrée comme un pare-brise de voiture, le risque de collision des deux raclettes est réduit voire supprimé, et ceci, tout en maintenant les deux raclettes à proximité l'une de l'autre dans leur position de repos, afin de réduire l'espace laissé libre, et donc non nettoyé, entre les deux aires de nettoyage correspondantes. Cette innovation d'inclinaison de portion de canalisation pourrait aussi être utilisée avantageusement si cette portion de canalisation n'était pas monobloc avec le capuchon recouvrant l'extrémité de la raclette. Cette innovation d'inclinaison de portion de canalisation pourrait donc être utilisée indépendamment de l'invention principale objet de cette demande de brevet.

Dans un premier mode de réalisation non représenté sur les figures ci-après, le gicleur est constitué d'un tube directement raccordé sur la portion de canalisation dont la direction moyenne est inclinée par rapport au plan moyen de la raclette.

La perte de charge lors du passage, d'abord par la portion de canalisation intégrée au capuchon puis par le gicleur, en est réduite.

Dans un deuxième mode de réalisation représenté sur les figures ci-après, le gicleur comprend un coude qui jouxte le tube et qui est raccordé à la portion de canalisation dont la direction moyenne est sensiblement parallèle au plan moyen de la raclette. La facilité d'orientation du gicleur lors du montage en est améliorée.

Préférentiellement, la portion de canalisation intégrée au capuchon d'une part et le gicleur d'autre part sont essentiellement constitués dans des matériaux différents entre eux. Le matériau du gicleur est préférentiellement plus dur que le matériau de la portion de canalisation. De préférence, le capuchon et la portion de canalisation sont en plastique et le gicleur est en métal. Ainsi le caractère plastique du capuchon et de la portion de canalisation monobloc avec le capuchon facilitent grandement la fabrication, tandis que le caractère métallique du gicleur permet une meilleure tenue des caractéristiques du jet de liquide projeté et ceci avec un encombrement réduit. La lèvre d'essuyage de la raclette souple est souple également, elle est préférentiellement en caoutchouc.

De préférence, le gicleur comprend un revêtement évitant qu'une goutte de liquide s'accroche à son embouchure. Ainsi, on évite que l'embouchure du gicleur soit obstruée par du liquide gelé. Le revêtement est par exemple en téflon.

Un véhicule inclut notamment un camion, une voiture, un bus, un train, un bateau, un avion. Un véhicule est de préférence un véhicule à moteur, avantageusement terrestre. Un véhicule est préférentiellement une voiture.

L'invention va maintenant être décrite plus en détail à l'aide des figures ci-après, données à titre d'exemples illustratifs et non limitatifs, où :
- la figure 1 représente schématiquement une vue éclatée de l'extrémité de la raclette souple, du capuchon et du gicleur, d'un balai d'essuie-glace selon l'invention ;
- la figure 2 représente schématiquement une vue en perspective d'un assemblage de l'extrémité de la raclette souple, du capuchon et du gicleur, sur un bras de balai d'essuie-glace selon l'invention ;
- la figure 3 représente schématiquement une vue de dessous d'un assemblage du capuchon et du gicleur, d'un balai d'essuie-glace selon l'invention ;
- la figure 4 représente schématiquement une vue de l'assemblage représenté à la figure 3, selon la coupe BB de la figure 3 ;
- la figure 5 représente schématiquement les différentes aires nettoyées sur la surface vitrée, pour deux positions relatives, distinctes entre elles, des extrémités de raclettes des deux balais d'essuie-glace situés sur un pare-brise de véhicule.

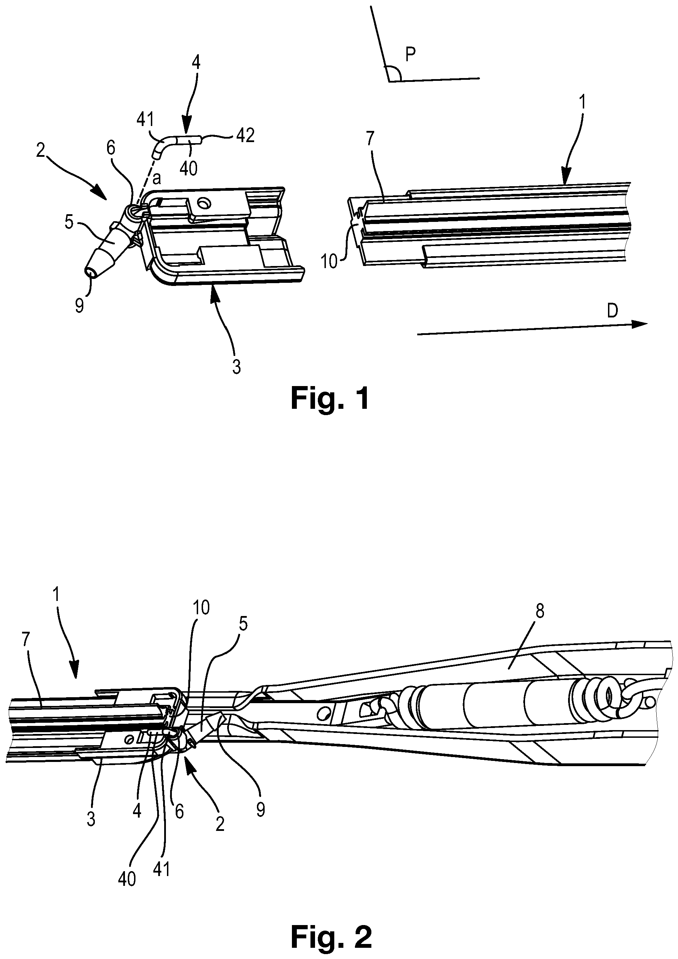

La figure 1 représente schématiquement une vue éclatée de l'extrémité de la raclette souple, du capuchon et du gicleur, d'un balai d'essuie-glace selon l'invention. La droite D représente la direction moyenne de la raclette 1 allongée. Le plan P représente le plan moyen de la raclette 1 allongée. Le plan P est orthogonal au plan moyen de la lèvre 7 d'essuyage.

Le balai d'essuie-glace comprend une raclette souple 1 intégrant une lèvre d'essuyage 7 destinée à essuyer l'eau sur la surface vitrée du véhicule. La raclette 1 et sa lèvre d'essuyage 7 sont en caoutchouc. L'extrémité 10 de la raclette 1 est destinée à être recouverte par un capuchon 3 qui est en plastique. Ce capuchon 3 vient se fixer à l'extrémité 10 de la raclette en se clippant.

Le dispositif de projection 2 de liquide de lavage comprend une portion de canalisation 5 qui est monobloc avec le reste de la structure du capuchon 3. La portion de canalisation 5 est donc réalisée dans la même matière plastique que celui du capuchon 3, de préférence par moulage. Une extrémité 6 de la portion de canalisation 5 intégrée au capuchon 3 est destinée à être reliée au gicleur 4 qui projette le liquide de lavage, par exemple à base d'eau et de détergent, directement sur la lèvre 7 de la raclette 1. Une autre extrémité 9 de la portion de canalisation 5 est destinée à être raccordée au tuyau souple d'alimentation en liquide de lavage. Le tuyau souple d'alimentation en liquide de lavage, non représenté, est relié au bocal de liquide lave-glace généralement situé sous le capot moteur du véhicule.

Le gicleur 4, destiné à être raccordé à l'extrémité 6 de la portion de canalisation 5, comprend un coude 41 destiné à s'enfoncer partiellement dans l'extrémité 6 ainsi qu'une partie extrême 40 droite, sous forme de tube, l'embouchure libre du tube 40 constituant l'orifice 42 de sortie du gicleur 4. Le jet de liquide de lavage sort par l'orifice 42 du gicleur 4 avant d'être projeté sur la lèvre 7 de la raclette 1 et avant de s'écouler ensuite de manière laminaire le long de la lèvre 7, au moins sur la majeure partie de la longueur de la lèvre 7, éventuellement aidé par la force centrifuge pour aller jusqu'au bout de la lèvre.

La forme interne du capuchon 3 est complexe et généralement réalisée par moulage. Le caractère raccordé et donc rapporté du gicleur 4, par rapport au capuchon 3 et par rapport à la portion de canalisation 5 monobloc avec le capuchon 3, c'est-à-dire formant une seule et même pièce avec le capuchon 3, autorise une fabrication relativement simple du capuchon 3 laquelle fabrication, si le gicleur 4 était monobloc avec la portion de canalisation 5, serait très complexe et coûteuse.

Lors de la mise en place du gicleur 4 par raccordement à l'extrémité 6 de la portion de canalisation 5 intégrée au capuchon 3, l'orientation du tube 40 autour de l'axe a peut être fixée pour s'adapter à la longueur de lèvre 7 de raclette 1 sur laquelle le liquide de lavage doit pouvoir s'écouler après projection, par pivotement autour de l'axe a. Ensuite le gicleur 4 est fixé par rapport à la portion de canalisation 5, par exemple par collage, par soudage, ou par boutterollage. L'axe de pivotement a est perpendiculaire au plan P.

La figure 2 représente schématiquement une vue en perspective d'un assemblage de l'extrémité de la raclette souple, du capuchon et du gicleur, sur un bras de balai d'essuie-glace selon l'invention. Le gicleur 4 a été partiellement introduit dans la portion de canalisation 5. Une partie du coude 41 du gicleur 4 est entrée dans la portion de canalisation 5 par l'extrémité 6. Le gicleur 4 a été fixé par rapport à la portion de canalisation de manière à obtenir l'orientation voulue pour la direction du tube 40 du gicleur 4, et de manière à la conserver ensuite pendant la durée de vie du gicleur. Le capuchon 3 a été clippé sur l'ensemble de l'extrémité 10 de la raclette 1. La raclette 1 a été montée sur le bras 8 du balai d'essuie-glace.

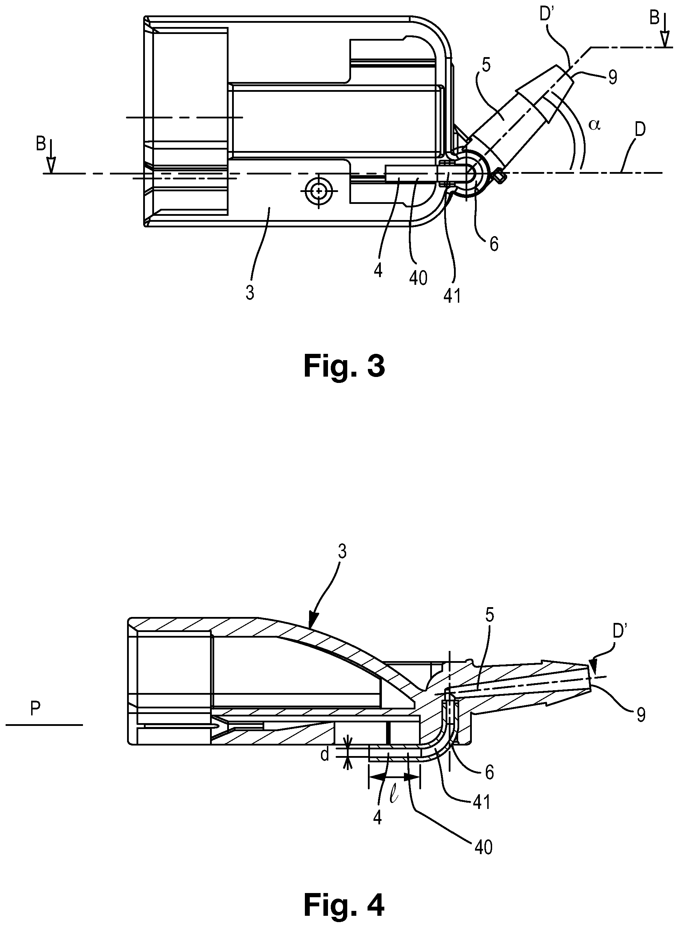

La figure 3 représente schématiquement une vue de dessous d'un assemblage du capuchon et du gicleur, d'un balai d'essuie-glace selon l'invention. La direction moyenne D' de la portion de canalisation 5 fait un angle α d'environ 45 degrés avec la direction D moyenne de la raclette 1.

La figure 4 représente schématiquement une vue de l'assemblage représenté à la figure 3, selon la coupe BB de la figure 3. La longueur l du tube 40 est égale à six fois le diamètre intérieur d du tube 40. La direction moyenne D' de la portion de canalisation 5 est sensiblement parallèle au plan moyen P de la raclette 1. Le diamètre intérieur de la portion de canalisation 5 est décroissant, dans le sens de circulation du liquide de lavage, c'est-à-dire de son extrémité 9 vers son extrémité 6, pour augmenter la pression de projection du jet de liquide de lavage en sortie du gicleur 4.

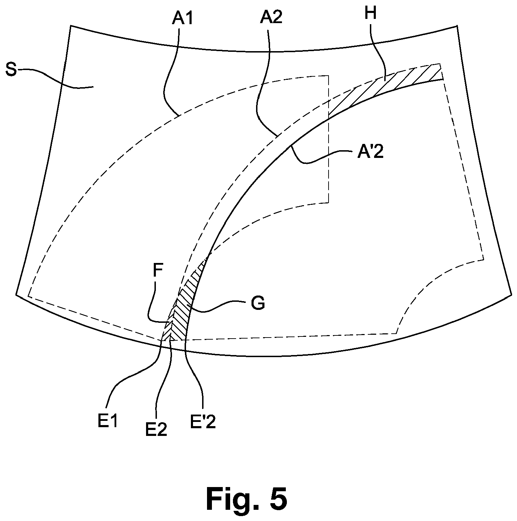

La figure 5 représente schématiquement les différentes aires nettoyées sur la surface vitrée, pour deux positions relatives, distinctes entre elles, des extrémités de raclettes des deux balais d'essuie-glace situés sur un pare-brise de véhicule. Soit S la surface du pare-brise. Soient E1 et E2 les positions au repos des extrémités contiguës des deux raclettes des deux balais d'essuie-glace, respectivement de la première raclette du premier balai et de la deuxième raclette du deuxième balai.

Les contours A1 et A2 entourent les aires de nettoyage respectives des deux raclettes.

Les positions E1 et E2 sont assez proches l'une de l'autre lorsque la direction moyenne de la portion de canalisation du premier balai est bien inclinée par rapport à la direction moyenne de la première raclette du premier balai. La zone F située entre les deux aires de nettoyage n'est pas nettoyée ; elle est toutefois de taille très réduite.

Si la direction moyenne D' de la portion de canalisation 5 devient plutôt dans le prolongement de la direction moyenne D de la première raclette du premier balai, l'extrémité de la deuxième raclette du deuxième balai se décale de la position E2 à la position E'2, et son aire de nettoyage est entourée par le contour A'2 qui est plus restreint que le contour A2. Il en résulte une zone supplémentaire G, située en bas de pare-brise, non nettoyée de taille bien plus importante que la zone F. De plus, une zone H, située en haut de pare-brise, n'est plus nettoyée non plus. Les zones F, G et H sont hachurées pour être rendues plus visibles.

Si la direction moyenne de la portion de canalisation est presque perpendiculaire à la direction moyenne de la première raclette du premier balai, la perte de charge devient très importante dans le gicleur situé en aval de la portion de canalisation. Cette configuration est donc rarement utilisée.

## Revendications

1. Balai d'essuie-glace de véhicule, comportant :
- une raclette souple (1) de forme allongée,
- un capuchon (3) recouvrant une extrémité de la raclette (1),
- un dispositif (2) de projection de liquide sur la lèvre d'essuyage de la raclette (1) comprenant :
- un gicleur (4) structuré et orienté de manière à projeter, au niveau d'une extrémité de la raclette (1), un jet de liquide sur la lèvre de la raclette qui s'écoule ensuite le long de la lèvre de la raclette (1), **caractérisé en ce que** ledit dispositif (2) de projection comprend en outre :
- une portion de canalisation (5) monobloc avec ledit capuchon (3), dont une extrémité est raccordée au gicleur (4) et dont une autre extrémité est destinée à être raccordée au tuyau d'alimentation en liquide.

2. Balai d'essuie-glace selon la revendication 1, **caractérisé en ce que** le gicleur (4) se termine par un tube de diamètre intérieur constant.

3. Balai d'essuie-glace selon la revendication 2, **caractérisé en ce que** la longueur du tube vaut au moins six fois son diamètre intérieur.

4. Balai d'essuie-glace selon la revendication 2 ou 3, **caractérisé en ce que** le diamètre intérieur du tube est compris entre 0.3mm et 1.5mm.

5. Balai d'essuie-glace selon l'une quelconque des revendications précédentes, **caractérisé en ce que** ladite portion de canalisation (5) est venue de matière avec le capuchon (3).

6. Balai d'essuie-glace selon l'une quelconque des revendications précédentes, **caractérisé en ce que** la direction moyenne (D') de ladite portion de canalisation (5) fait, avec la direction moyenne (D) de la raclette (1), un angle compris entre 30 degrés et 60 degrés.

7. Balai d'essuie-glace selon la revendication 6, **caractérisé en ce que** la direction moyenne (D') ladite portion de canalisation (5) fait, avec la direction moyenne (D) de la raclette (1), un angle compris entre 40 degrés et 50 degrés.

8. Balai d'essuie-glace selon l'une quelconque des revendications 1 à 7, **caractérisé en ce que** le gicleur (4) est constitué d'un tube directement raccordé sur la portion de canalisation (5) dont la direction moyenne (D') est inclinée par rapport au plan moyen de la raclette (1).

9. Balai d'essuie-glace selon l'une quelconque des revendications 1 à 7, **caractérisé en ce que** le gicleur (4) comprend un coude qui jouxte le tube et qui est raccordé à la portion de canalisation (5) dont la direction moyenne (D') est sensiblement parallèle au plan moyen de la raclette (1).

10. Balai d'essuie-glace selon l'une quelconque des revendications précédentes, **caractérisé en ce que** le matériau du gicleur (4) est plus dur que le matériau de la portion de canalisation (5) et que le matériau du capuchon (3).

11. Balai d'essuie-glace selon la revendication 10, **caractérisé en ce que** le capuchon (3) et la portion de canalisation (5) sont en plastique et **en ce que** le gicleur (4) est en métal.

12. Balai d'essuie-glace selon l'une quelconque des revendications précédentes, **caractérisé en ce que** le gicleur (4) comprend un revêtement évitant qu'une goutte de liquide s'accroche à son embouchure.

## Patentansprüche

1. Fahrzeug-Scheibenwischerblatt das Folgendes umfasst:
- einen elastischen Schaber (1) mit länglicher Form,
- eine Kappe (3), die ein Ende des Schabers (1) abdeckt,
- eine Vorrichtung (2) zum Sprühen von Flüssigkeit auf die Wischlippe des Schabers (1), die Folgendes umfasst:
- eine Spritzdüse (4), die derart strukturiert und ausgerichtet ist, dass sie im Bereich eines Endes des Schabers (1) einen Flüssigkeitsstrahl auf die Lippe des Schabers sprüht, der dann entlang der Lippe des Schabers (1) abfließt, **dadurch gekennzeichnet, dass** die eine Sprühvorrichtung (2) außerdem Folgendes umfasst:
- einen Kanalisationsabschnitt (5) aus einem Stück mit der Kappe (3), von dem ein Ende mit der Spritzdüse (4) verbunden ist, und von dem ein anderes Ende dazu bestimmt ist, an den Flüssigkeitsversorgungsschlauch angeschlossen zu sein.

2. Scheibenwischerblatt nach Anspruch 1, **dadurch gekennzeichnet, dass** die Spritzdüse (4) in einem Rohr mit einem konstanten Innendurchmesser endet.

3. Scheibenwischerblatt nach Anspruch 2, **dadurch gekennzeichnet, dass** die Länge des Rohrs mindestens sechs Mal seinen Innendurchmesser beträgt.

4. Scheibenwischerblatt nach Anspruch 2 oder 3, **dadurch gekennzeichnet, dass** der Innendurchmesser des Rohrs zwischen 0,3 mm und 1,5 mm liegt.

5. Scheibenwischerblatt nach einem der vorhergehenden Ansprüche, **dadurch gekennzeichnet, dass** der Kanalisationsabschnitt (5) aus einem Stück mit der Kappe (3) gefertigt ist.

6. Scheibenwischerblatt nach einem der vorhergehenden Ansprüche, **dadurch gekennzeichnet, dass** die mittlere Richtung (D') des Kanalisationsabschnitts (5) mit der mittleren Richtung (D) des Schabers (1) einen Winkel zwischen 30 Grad und 60 Grad bildet.

7. Scheibenwischerblatt nach Anspruch 6, **dadurch gekennzeichnet, dass** die mittlere Richtung (D') des Kanalisationsabschnitts (5) mit der mittleren Richtung (D) des Schabers (1) einen Winkel zwischen 40 Grad und 50 Grad bildet.

8. Scheibenwischerblatt nach einem der Ansprüche 1 bis 7, **dadurch gekennzeichnet, dass** die Spritzdüse (4) aus einem Rohr besteht, das direkt auf dem Kanalisationsabschnitt (5), dessen mittlere Richtung (D') in Bezug zu der mittleren Ebene des Schabers (1) geneigt ist, angeschlossen ist.

9. Scheibenwischerblatt nach einem der Ansprüche 1 bis 7, **dadurch gekennzeichnet, dass** die Spritzdüse (4) ein Winkelteil umfasst, das neben dem Rohr liegt und an den Kanalisationsabschnitt (5), dessen mittlere Richtung (D') im Wesentlichen zu der mittleren Ebene des Schabers (1) parallel ist, angeschlossen ist.

10. Scheibenwischerblatt nach einem der vorhergehenden Ansprüche, **dadurch gekennzeichnet, dass** der Werkstoff der Spritzdüse (4) härter ist als der Werkstoff des Kanalisationsabschnitts (5) und als der Werkstoff der Kappe (3).

11. Scheibenwischerblatt nach Anspruch 10, **dadurch gekennzeichnet, dass** die Kappe (3) und der Kanalisationsabschnitt (5) aus Kunststoff bestehen, und dass die Spritzdüse (4) aus Metall besteht.

12. Scheibenwischerblatt nach einem der vorhergehenden Ansprüche, **dadurch gekennzeichnet, dass** die Spritzdüse (4) eine Beschichtung umfasst, die verhindert, dass ein Flüssigkeitstropfen an ihrer Mündung haftet.

## Claims

1. A vehicle windshield wiper blade, comprising:
- an elongate flexible scraper (1),
- a cap (3) covering one end of the scraper (1),
- a device (2) for spraying liquid onto the wiping lip of the scraper (1), including:
- a nozzle (4) structured and oriented such as to spray a jet of liquid from one end of the scraper (1) onto the lip of the scraper, which then flows along the lip of the scraper (1), **characterized in that** said spraying device (2) further includes:
- a duct portion (5) integral with said cap (3), said duct portion having one end connected to the nozzle (4) and another end intended to be connected to the liquid supply pipe.

2. The windshield wiper blade according to Claim 1, **characterized in that** the nozzle (4) terminates by a tube having a constant interior diameter.

3. The windshield wiper blade according to Claim 2, **characterized in that** the length of the tube is equal to at least six times its interior diameter.

4. The windshield wiper blade according to Claim 2 or 3, **characterized in that** the interior diameter of the tube is comprised between 0.3 mm and 1.5 mm.

5. The windshield wiper blade according to any one of the preceding claims, **characterized in that** said duct portion (5) is integral with the cap (3).

6. The windshield wiper blade according to any one of the preceding claims, **characterized in that** the mean direct (D') of said duct portion (5) forms, with the mean direction (D) of the scraper (1), an angle comprised between 30 degrees and 60 degrees.

7. The windshield wiper blade according to Claim 6, **characterized in that** the mean direction (D') of said duct portion (5) forms, with the mean direction (D) of the scraper (1), an angle comprised between 40 degrees and 50 degrees.

8. The windshield wiper blade according to any one of Claims 1 to 7, **characterized in that** the nozzle (4) is constituted by a tube directly connected on the duct portion (5), the mean direction (D') of which is inclined with respect to the mean plane of the scraper (1).

9. The windshield wiper blade according to any one of Claims 1 to 7, **characterized in that** the nozzle (4) includes an elbow which adjoins the tube and which is connected to the duct portion (5), the mean direction (D') of which is substantially parallel to the mean plane of the scraper (1).

10. The windshield wiper blade according to any one of the preceding claims, **characterized in that** the material of the nozzle (4) is harder than the material of the duct portion (5) and than the material of the cap (3).

11. The windshield wiper blade according to Claim 10, **characterized in that** the cap (3) and the duct portion (5) are made of plastic and **in that** the nozzle (4) is made of metal.

12. The windshield wiper blade according to any one of the preceding claims, **characterized in that** the nozzle (4) includes a covering preventing a drop of liquid from clinging to its orifice.
